# FASCICULE DE BREVET EUROPEEN

(11) **EP 0 922 482 B1**
(45) Date de publication et mention de la délivrance du brevet: **27.08.2003**
(21) Numéro de dépôt: 98403030.4
(22) Date de dépôt: 03.12.1998
(51) Int. Cl.: B01D 53/047, B01D 53/02, B01J 20/04

(54) **Procédé de purification d'air par adsorption sur alumine calcinée des impuretés CO2 et H2O**
Verfahren zur Abscheidung von CO2 und Wasser aus Luft durch Adsorption mit kalziniertem Alumina
Process for eliminating CO2 and water from air by adsorption on calcined alumina

(30) Priorité: 08.12.1997 FR 9715490
(43) Date de publication de la demande: 16.06.1999
(73) Titulaire: L'air Liquide, S.A. à Directoire et Conseil de Surveillance pour l'Etude et l'Exploitation des Procédés Georges Claude, 75321 Paris Cedex 07 (FR)
(72) Inventeur: Millet, Cyrille, 75014 Paris (FR); Bourgeois, Philippe, 75015 Paris (FR); Kraus, Georges, 75006 Paris (FR); Gabillard, Jean-Pierre, 78610 Auffargis (FR)
(74) Mandataire: Pittis, Olivier

(56) Documents cités:
- EP-A- 0 379 394
- EP-A- 0 766 991
- US-A- 4 433 981
- US-A- 5 232 474

## Description

Le but de la présente invention est de proposer un procédé de prétraitement ou purification de l'air atmosphérique avant séparation cryogénique dudit air, en particulier par distillation cryogénique.

Il est connu que l'air atmosphérique contient des composés devant être éliminé avant l'introduction dudit air dans les échangeurs thermiques de la boîte froide d'une unité de séparation d'air, notamment les composés dioxyde de carbone (CO₂) et vapeur d'eau (H₂O).

En effet, en l'absence d'un tel prétraitement de l'air pour en éliminer ses impuretés CO₂ et eau, on assiste à une condensation et à un solidification en glace de ces impuretés lors du refroidissement de l'air à température cryogénique, d'où il peut résulter des problèmes de colmatage de l'équipement, notamment les échangeurs thermiques, des colonnes de distillation...

En outre, il est également d'usage d'éliminer les impuretés hydrocarbures susceptibles d'être présentes dans l'air afin d'éviter leur trop forte concentration dans le bas de la ou des colonnes de distillation, de pallier ainsi tout risque d'explosion.

Actuellement, ce prétraitement de l'air est effectué, selon le cas, par procédé TSA (Temperature Swing Adsorption) ou par procédé PSA (Pressure Swing Adsorption); par procédé PSA, on entend les procédés PSA proprement-dits, les procédés VSA (Vacuum Swing Adsorption), les procédés VPSA et analogues.

Classiquement, un cycle de procédé TSA comporte les étapes suivantes:
a) purification de l'air par adsorption des impuretés à pression super-atmosphérique et à température ambiante,
b) dépressurisation de l'adsorbeur jusqu'à la pression atmosphérique ou en-dessous de la pression atmosphérique,
c) régénération de l'adsorbant à pression atmosphérique, notamment par les gaz résiduaires ou gaz déchets, typiquement de l'azote impur provenant d'une unité de séparation d'air et réchauffé jusqu'à une température habituellement entre 100 et 200°C au moyen d'un ou plusieurs échangeurs thermiques,
d) refroidissement à température ambiante ou sub-ambiante de l'adsorbant, notamment en continuant à y introduire ledit gaz résiduaire issu ce l'unité de séparation d'air, mais non réchauffé,
e) repressurisation de l'adsorbeur avec de l'air purifié issu, par exemple, d'un autre adsorbeur se trouvant en phase de production.

Habituellement, un cycle de procédé PSA comporte, quant à lui, sensiblement les mêmes étapes a), b) et e), mais se distingue d'un procédé TSA par une absence de réchauffement du ou des gaz résiduaires lors de l'étape de régénération (étape c)), donc l'absence de l'étape d) et, en général, un temps de cycle plus court qu'en procédé TSA.

Généralement, les dispositifs de prétraitement de l'air comprennent deux adsorbeurs, fonctionnant de manière alternée, c'est-à-dire que l'un des adsorbeurs est en phase de production, pendant que l'autre est en phase de régénération.

De tels procédés TSA de purification d'air sont notamment décrit dans les documents US-A-3738084 et FR-A-7725845.

En général, l'élimination du CO₂ et de la vapeur d'eau est effectuée sur plusieurs lits d'adsorbants, à savoir un premier adsorbant destiné à arrêter préférentiellement l'eau, par exemple un lit d'alumine activée, de gel de silice ou de zéolites, et un deuxième lit d'adsorbant pour arrêter préférentiellement le CO₂, par exemple une zéolite. On peut citer notamment les documents US-A-5531808, US-A-5587003 et US-A-4233038.

Par contre, obtenir une élimination efficace du CO₂ et de la vapeur d'eau contenus dans l'air sur un même et unique lit d'adsorbant n'est pas chose aisée.

En effet, il est connu que l'eau présente une affinité pour les adsorbants nettement supérieure à celle du CO₂.

De là, l'adsorbant arrête, en général, plus facilement l'eau que le CO₂ et donc plus la quantité d'eau adsorbée est importante, plus la quantité de CO₂ adsorbée est faible.

En d'autres termes, la sélectivité des adsorbants classiques est plus favorable à l'eau au'au CO₂.

En outre, pour pouvoir régénérer un adsorbant saturé en eau, il est usuel de porter cet adsorbant à une température de régénération supérieure à 100°C.

Or, actuellement, très peu d'adsorbants mis en oeuvre à l'échelle industrielle dans des unités TSA possèdent une structure physico-chimique susceptible de résister longtemps à un tel traitement hydrothermique; les matériaux de type alumine en font partie, alors que la plupart des matériaux de type zéolite sont à exclure.

En résumé, les adsorbants connus peuvent être classés en deux grandes catégories, à savoir:
- les adsorbants ayant une capacité d'adsorption du CO₂ élevée, mais seulement en l'absence de toute vapeur d'eau, c'est-à-dire les adsorbants efficaces pour l'élimination du CO₂ présent dans un gaz sec,
- et les adsorbants destinés à éliminer spécifiquement la vapeur d'eau et ne présentant qu'une affinité faible, voire nulle, pour le CO₂.

A ce titre, on peut citer le document US-A-5232474 qui décrit l'utilisation d'une alumine activée pour sécher et décarbonater l'air par un procédé PSA, dans le quel il est stipulé que l'eau est arrêtée par environ 175 mm de hauteur de lit d'adsorbant, alors que pour adsorber tout le CO₂, il est nécessaire ce prévoir 1020 mm de hauteur de lit. On comprend donc que le CO₂ et l'eau ne sont pas coadsorbés, mais arrêtés par des zones différentes du lit d'adsorbant.

Le but de la présente invention est donc de proposer un procédé de purification mettant en oeuvre un adsorbant capable d'arrêter, si possible simultanément, sur une même portion de lit d'adsorbant, à la fois l'eau et le dioxyde de carbone susceptible de se trouver dans l'air atmosphérique, de manière à récupérer de l'air purifié, sensiblement exempt de CO₂ et/ou de vapeur d'eau, lequel air pourra subséquemment pourra être envoyé vers une unité de séparation d'air.

En outre, le fait d'adsorber à la fois la vapeur d'eau et le CO₂ sur un même lit d'adsorbant permet de diminuer la quantité d'adsorbant à utiliser, permet de diminuer la complexité des adsorbeurs grâce à une suppression des grilles de séparations entre les différents lits d'adsorbant et permet donc de réduire les coûts et la consommation d'énergie des unités de séparation d'air.

Il a maintenant été constaté, de façon surprenante, qu'un adsorbant habituellement utilisé pour éliminer le dioxyde de carbone d'un flux d'hydrocarbures, telles les oléfines, peut être avantageusement utilisé dans un procédé de décarbonatation et dessiccation de l'air avant séparation cryogénique dudit air; ledit adsorbant étant une alumine imprégnée par une solution alcaline et calcinée, tel que décrit dans les documents US-A-4433981 et US-A-4493715.

A ce titre, il faut souligner que le but initialement visé par les documents US-A-4433981 et US-A-4493715 est d'éviter une isomérisation des chaînes d'hydrocarbures lors de cette · purification et non une élimination spécifique du CO₂; ce problème d'isomérisation n'existant pas dans le cas de la purification d'air.

En effet, il a été mis en évidence, de manière inattendue, qu'une alumine calcinée pouvait arrêter simultanément, c'est-à-dire sur une même portion de lit d'adsorbant, l'eau et le dioxyde de carbone présents dans l'air atmosphérique, de préférence à température ambiante.

Dans le cadre de la présente invention, on appelle alumine calcinée, un adsorbant à base d'alumine activée obtenu, en général, à partir de la déshydratation rapide d'un hydroxyde d'aluminium, laquelle est mise en forme, sous forme de granulés ou de billes par exemples, puis imprégné par une solution saline et, finalement soumis à un séchage et à une calcination subséquente; un tel adsorbant peut, en outre, contenir de l'oxyde de silicium (SiO₂) en concentration non-négligeable.

En outre, il est à noter que le document EF-A-0766991 décrit un procédé de décarbonatation de l'air mettant en oeuvre un adsorbant de type alumine imprégnée par une solution basique ayant un pH d'au moins 9, laquelle est subséquemment séchée. Il faut souligner que ce document stipule que les alumines imprégnées, c'est-à-dire non calcinées, ont une capacité d'adsorption pour le CO₂ supérieure aux autres adsorbants. De plus, ce document est totalement silencieux quant à la possibilité d'éliminer ou non la vapeur d'eau susceptible de se trouver dans l'air atmosphérique sur ladite alumine imprégnée.

Le but de la présente invention est de proposer un procédé de coadsorbtion au CO₂ et de la vapeur d'eau susceptible de se trouver dans un flux d'air atmosphérique afin de pouvoir obtenir de l'air dessiccé et décarbonaté.

L'invention concerne alors un procédé de purification d'un flux d'air contenant du dioxyde de carbone (CO₂) et de la vapeur d'eau, dans lequel on élimine au moins une partie des impuretés CO₂ et vapeur d'eau, par adsorption desdites impuretés sur au moins une alumine calcinée contenant au moins un oxyde métallique alcalin ou alcalino-terreux, la teneur maximale en cet oxyde étant de 10 % en poids de préférence de 1 à 10% en poids, ladite adsorption étant réalisée à une température comprise entre -10°C et 80°C.

Dans le cadre de la présente invention on entend par air, non seulement de l'air atmosphérique, mais aussi de l'air ayant subit un prétraitement ou une modification de la teneur en l'un ou plusieurs de ces constituants, par exemple de l'air enrichi ou appauvri en azote ou en oxygène, ou de l'air préalablement au moins partiellement dessiccé, ledit air pouvant être collecté directement à l'atmosphère ou le cas échéant, à l'intérieur d'un bâtiment ou d'une enceinte chauffée ou non.

Selon le cas le procédé de l'invention peut comprendre l'une ou plusieurs des caractéristiques suivantes:
- au moins une alumine calcinée est obtenue par :
   a) imprégnation d'un adsorbant à base d'alumine activée avec au moins une solution saline d'au moins un métal alcalin ou alcalino-terreux choisi parmi Li, Na, K, Mg, Ca, Sr et Ba;
   b) séchage de l'adsorbant à base d'alumine imprégnée obtenu à l'étape a) à une température d'au moins 15°C, de préférence au moins 80°C;
   c) calcination de l'adsorbant à base d'alumine séchée obtenu à l'étape b) à une température d'au moins 120°C, de préférence entre 150°C et 600°C;
- au moins un métal alcalin ou alcalino-terreux est choisi parmi le calcium, le sodium, le potassium et leurs mélanges;
- l'alumine calcinée contient de 4 à 10 % en poids d'oxyde métallique alcalin ou alcalino-terreux, de préférence entre 5 et 8%, ou, selon le cas, au maximum 5% en poids d'oxyde métallique alcalin ou alcalino-terreux, de préférence de 1 à 4%, par exemples les oxydes métalliques suivants: K₂O, Na₂O et CaO;
- les particules d'alumine calcinée ont une taille comprise entre 1 et 5 mm, de préférence entre 2 et 4 mm;
- il comporte une élimination de la vapeur d'eau sur au moins une alumine calcinée;
- l'élimination du CO₂ et de la vapeur d'eau est réalisée dans au moins un adsorbeur et, de préférence, dans au moins deux adsorbeurs fonctionnant de manière alternée;
- il est choisi dans le groupe formé par les procédés TSA et PSA;
- on opère à une pression d'adsorption de 10⁵ à 10⁷ Pa, de préférence 4.10⁵ Pa à 5.10⁶ Pa;
- on opère à une température de 10°C à 70°C, de préférence de 20°C à 55°C;
- il comprend au moins une étape de régénération de l'adsorbant à une température de régénération allant de 0°C à 250°C environ, de préférence entre 70°C et 200°C;
- il comprend au moins une étape de séparation cryogénique d'au moins une partie de l'air purifié, de préférence une étape de distillation cryogénique de l'air purifié.

La présente invention va maintenant être décrite plus en détail à l'aide d'exemples et en références aux figures annexées, données à titre illustratif mais non limitatif.

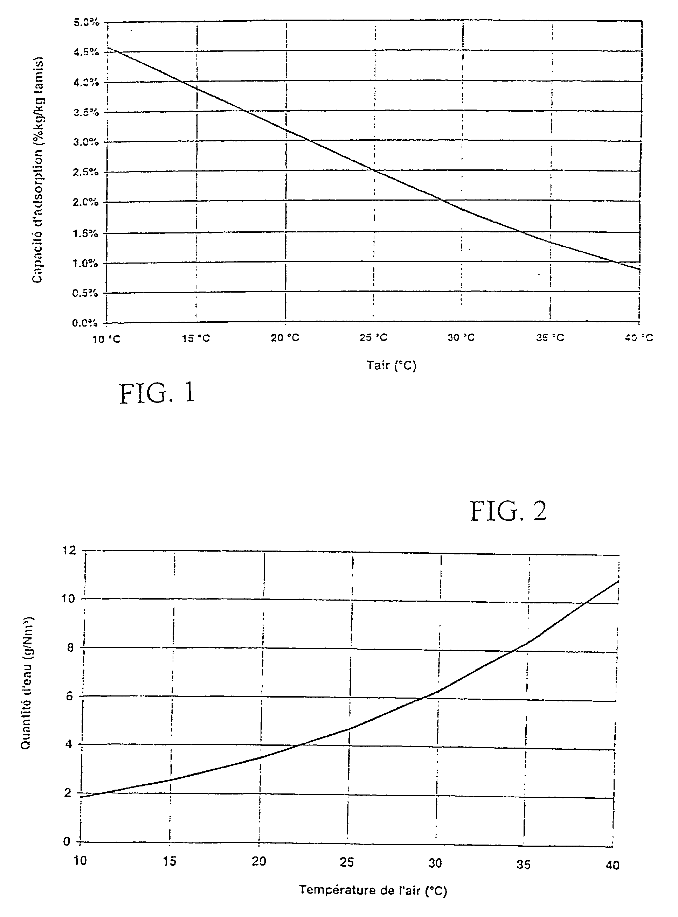

La figure 1 représente l'évolution de la capacité d'adsorption en dioxyde de carbone (CO₂) pour une zéolite de type 13X classique en fonction de la température de l'air; la température (en °C) est donnée en abscisses et la capacité d'adsorption (%) est donnée en ordonnées.

Il apparaît immédiatement que la zéolite 13X a une capacité d'adsorption du CO₂ qui diminue nettement lorsque la température de l'air à décarbonater augmente.

Or, si l'on souhaite réduire les coûts en investissement et en consommation d'énergie des unités des séparations d'air, il est nécessaire ou souhaitable de supprimer les groupes frigorifiques et les tours de refroidissement eau/gaz utilisés jusqu'alors.

Il s'ensuit, que dans ces conditions, l'air à purifier à une température généralement comprise entre 30°C et 40°C, c'est-à-dire une température pour laquelle les adsorbants de type zéolite deviennent très peu efficaces de par une capacité d'adsorption pour le CO₂ très faible.

En outre, la figure 2 représente la quantité d'eau contenue par de l'air saturé en vapeur d'eau à une pression de 5,5.10⁵ Pa en fonction de la température de celui-ci; la température (en °C) de l'air est donnée en abscisses et la quantité d'eau (en g/Nm³) contenue dans ledit air est donnée en ordonnées. il apparaît que la quantité d'eau contenue par l'air saturé en vapeur d'eau augmente lorsque la température dudit air augmente.

Au vu des figures 1 et 2, on comprend que, lorsque la température de l'air à purifier augmente, on assiste à une diminution de la capacité de décarbonatation (figure 1) et à une augmentation de la quantité d'eau à arrêter (figure 2), cette augmentation de la quantité d'eau à arrêter allant au détriment d'une décarbonatation correcte et efficace du flux d'air et donc à accentuer la diminution de la capacité d'adsorption en CO₂ de l'adsorbant. De là, les capacités d'adsorption en CO₂ respectives de la zéolite 13X précitée, d'une alumine activée de type classique, c'est-à-dire non-calcinée, et de deux alumines calcinées ont été mesurées et sont données dans le tableau I suivant.

Les alumines calcinées testées sont obtenues par imprégnation d'une alumine par une solution saline alcaline, ici une solution de NaOH, puis séchage et calcination à une température supérieure à 150°C, de manière à obtenir une première alumine calcinée contenant environ 2% d'oxyde de sodium (Na₂O) et une deuxième alumine calcinée contenant environ 7% en masse d'oxyde de sodium.

On obtient le pourcentage massique d'oxyde de sodium désiré, en faisant varier la concentration et le volume de la solution saline; de manière connue de l'homme du métier.

Les essais expérimentaux sont réalisés dans une colonne de 300 x 60 mm avec, en tant que gaz vecteur, de l'azote à une pression de 6.10⁵ Pa, à une température d'environ 27°C et contenant environ 450 ppm de CO₂.

**TABLEAU I**

| Adsorbant | Capacité d'adsorption en CO₂ |
|---|---|
| Alumine activée non calcinée | 0,22 mmol/g |
| Zéolite 13X | 0,81 mmol/g |
| Alumine calcinée (2% Na₂O) | 0,44 mmol/g |
| Alumine calcinée (7% Na₂O) | 1,47 mmol/g |

On constate au vu du tableau I, que la capacité d'adsorption en CO₂ d'une alumine calcinée est supérieure à celle d'une alumine activée non calcinée de type classique.

En outre, on voit également qu'augmenter la quantité d'oxyde de sodium dans une alumine permet d'augmenter la capacité d'adsorption en CO₂ de cette alumine.

Ainsi, pour une alumine calcinée contenant environ 7% d'oxyde de sodium, on obtient, à température ambiante (ici environ 27°C), une capacité d'adsorption de celle-ci nettement supérieure à celle obtenue au moyen d'une zéolite 13X classique.

Toutefois, on constate que pour une alumine calcinée ne contenant que 2% d'oxyde de sodium, la capacité d'adsorption est inférieure à celle d'une zéolite 13X.

Cependant, ainsi que montré sur les figures 1 et 2, une zéolite 13X ne permet pas une coadsorption du CO₂ et de la vapeur d'eau susceptible de se trouver dans une flux d'air atmosphérique.

En d'autres termes, en présence simultanée de vapeur d'eau et de CO₂, la capacité de coadsorption d'une alumine calcinée contenant 2% d'oxyde de sodium est supérieure à celle d'une zéolite 13X, ainsi que détaillé ci-après.

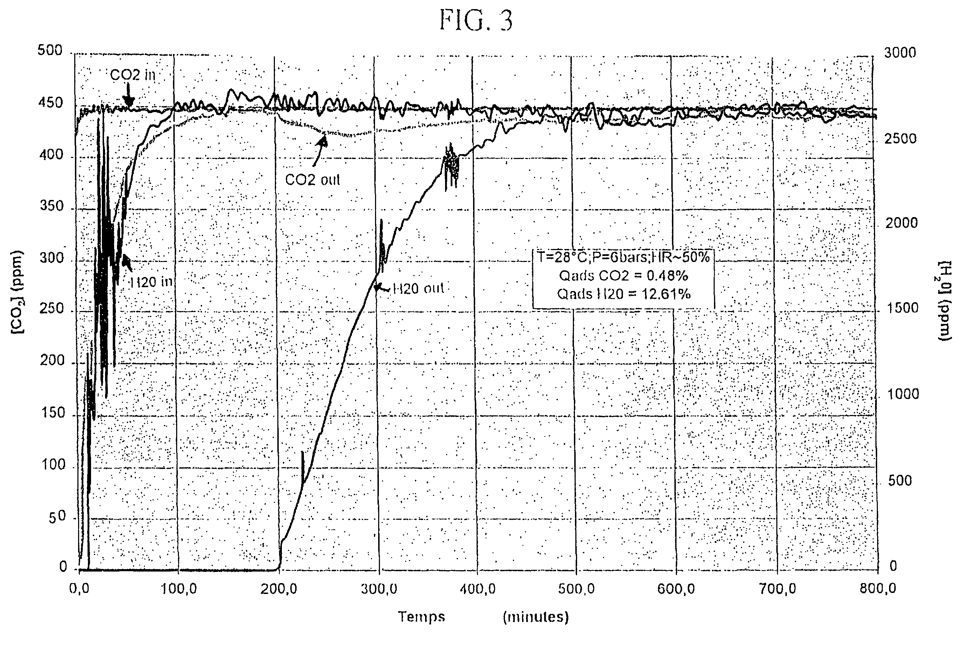

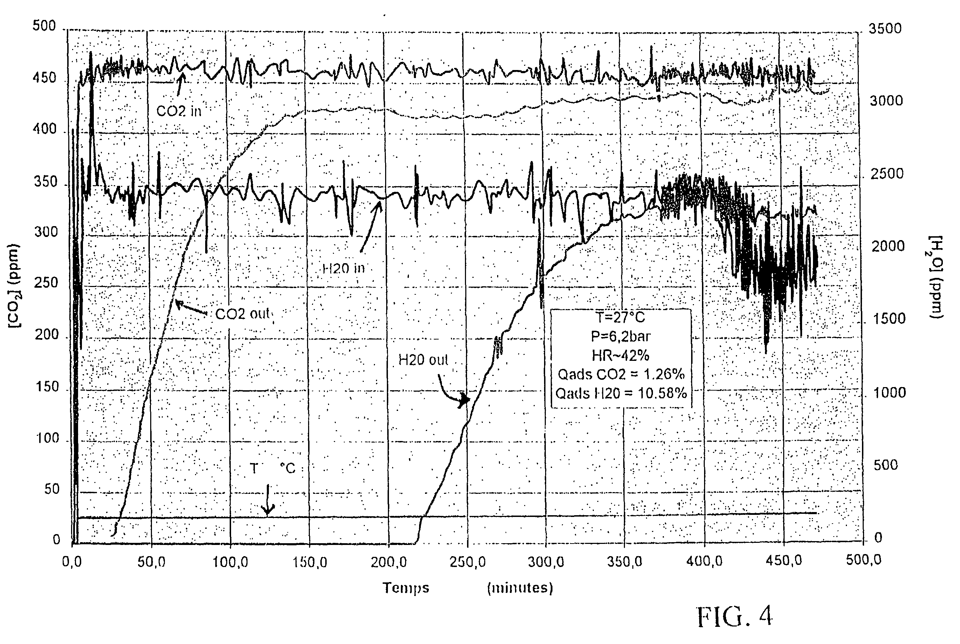

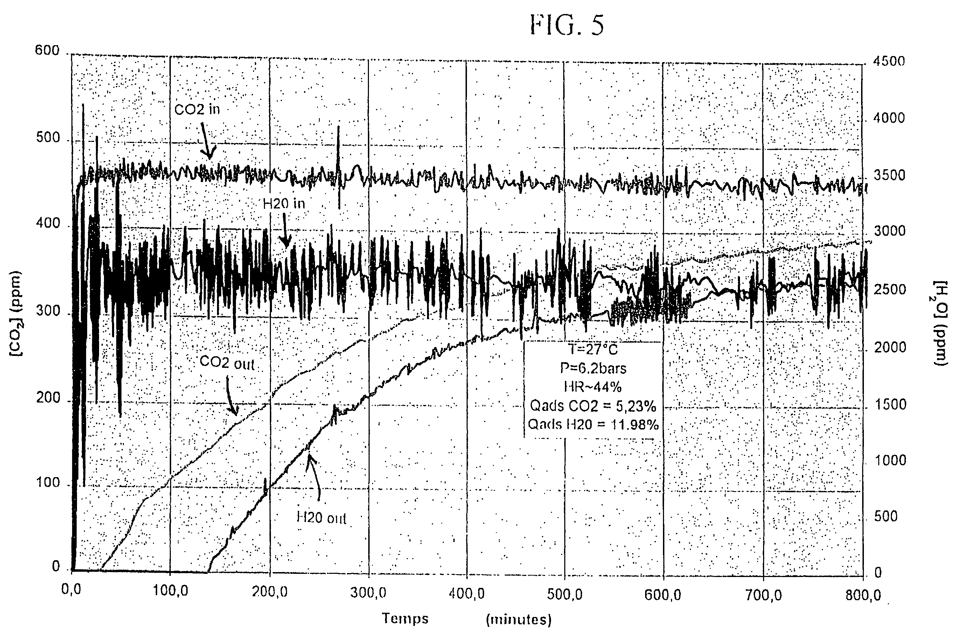

Les figures 3, 4 et 5 représentent, respectivement, les courbes de percée, c'est-à-dire de coadsorption du CO₂ et de la vapeur d'eau sur un adsorbant de type alumine activée non calcinée (figure 3), alumine calcinée contenant environ 2% d'oxyde de sodium (figure 4) et alumine calcinée contenant environ 7% d'oxyde de sodium (figure 5).

Les mesures ont été effectuées dans des conditions analogues, à savoir une température de 27 à 28°C, une pression d'adsorption de 6 à 6,2.10⁵ Pa et une humidité relative de 42 à 50% environ.

Le flux à épurer contient environ 450 ppm de CO₂ (CO₂ in) et environ 3 500 ppm de vapeur d'eau (H₂O in).

Il apparaît sur la figure 3 que l'alumine activée non calcinée n'adsorbe que très peu de CO₂ (courbe CO₂ out) étant donné que l'on assiste à une percée quasi-immédiate dudit CO₂, c'est-à-dire que celui-ci se retrouve très rapidement en aval du lit d'adsorption, ce qui démontre sa faible co-adsorption par l'alumine activée non-calcinée.

Par contre, l'alumine activée non-calcinée permet de retenir efficacement la vapeur d'eau contenu dans le flux à épurer (courbe H₂O out) celle-ci n'étant pas détectée pendant environ 200 minutes, puis perçant progressivement jusqu'à ne plus être retenue après environ 400 minutes.

Il en résulte que la capacité d'adsorption en CO₂ (Qads CO₂) d'une alumine activée non-calcinée est de 0,48% et que sa capacité d'adsorption en eau (Qads H₂O) est d'environ 12,61%.

De manière analogue on constate sur les figures 4 et 5 que, si la capacité d'adsorption en eau (Qads H₂O) d'une alumine calcinée selon l'invention contenant, selon le cas, 2% ou 7% d'oxyde de sodium et sensiblement équivalente à la capacité d'adsorption en eau d'une alumine non-activée (figure 3), il n'en va pas de même en ce qui concerne l'adsorption du CO₂ par une telle alumine calcinée.

En effet, on constate sur les figures 4 et 5 qu'une alumine contenant un oxyde de sodium est susceptible de coadsorber en même temps que l'eau, le CO₂ présent dans un flux d'air. On obtient alors, pour une alumine calcinée à 2% d'oxyde de sodium une capacité d'adsorption du CO₂ de 1,26% et une capacité d'adsorption de l'eau de 10,58%, et pour une alumine activée à 7% d'oxyde de sodium une capacité d'adsorption de CO₂ de 5,23% et une capacité d'adsorption de l'eau de 11,98%.

En d'autres termes, une alumine calcinée contenant un oxyde de métal alcalin ou alcalino-terreux, tel un oxyde de sodium, a une capacité d'adsorption pour le CO₂ de 3 à 11 fois supérieure à celle d'une alumine activée non-calcinée classique et ce, pour une capacité d'adsorption de l'eau sensiblement équivalente.

On constate, en outre, que la capacité d'adsorption en CO₂ d'une alumine activée augmente avec la proportion d'oxyde de métal alcalin ou alcalino-terreux qu'elle contient.

De là, il est préférable d'utiliser des alumines calcinées contenant au moins 2%, et si possible au moins 4 à 5% environ d'un oxyde d'un métal alcalin ou alcalino-terreux, tel un oxyde de sodium.

De préférence, le procédé de purification selon l'invention est de type PSA lorsqu'on emploie une alumine calcinée contenant au plus 5% d'au moins un oxyde métallique alcalin ou alcalino-terreux.

En outre, pour une alumine calcinée contenant 1% à 10% environ, de préférence de 4% à 8%, d'oxyde métallique, le procédé de l'invention est avantageusement de type TSA.

Par ailleurs, dans certains cas, il peut être souhaitable d'éliminer également les impuretés hydrocarbures susceptibles d'être présentes dans l'air atmosphérique, par exemple sur un lit d'un adsorbant spécifique pour ces impuretés, tel un lit de zéolite ou de tout autre adsorbant analogue adéquat.

## Revendications

1. Procédé de purification d'un flux d'air contenant du dioxyde de carbone (CO₂) et de la vapeur d'eau, dans lequel on élimine au moins une partie des impuretés CO₂ et vapeur d'eau, par adsorption desdites impuretés sur au moins une alumine calcinée contenant au moins un oxyde métallique alcalin ou alcalino-terreux, la teneur maximale en cet oxyde étant de 10 % en poids ladite adsorption étant réalisée à une température comprise entre -10°C et 80°C.

2. Procédé selon la revendication 1, **caractérisé en ce qu'**au moins une alumine calcinée est obtenue par :
a) imprégnation d'un adsorbant à base d'alumine activée avec au moins une solution saline d'au moins un métal alcalin ou alcalino-terreux;
b) séchage d'un adsorbant à base d'alumine imprégnée obtenu à l'étape a) à une température d'au moins 15°C;
c) calcination d'un adsorbant à base d'alumine séchée obtenu à l'étape b) à une température d'au moins 120°C.

3. Procédé selon l'une des revendications 1 ou 2, **caractérisé en ce qu'**au moins un métal alcalin ou alcalino-terreux est choisi parmi le sodium, le potassium, le calcium et leurs mélanges.

4. Procédé selon l'une des revendications 1 à 3, **caractérisé en ce que** l'alumine calcinée contient de 4 à 10 % en poids d'oxyde métallique alcalin ou alcalino-terreux.

5. Procédé selon l'une des revendications 1 à 3, **caractérisé en ce que** l'alumine calcinée contient au maximum 5% en poids d'oxyde métallique alcalin ou alcalino-terreux.

6. Procédé selon l'une des revendications 1 à 5, **caractérisé en ce que** les particules d'alumine calcinée ont une taille comprise entre 1 et 5 mm.

7. Procédé selon l'une des revendications 1 à 6, **caractérisé en ce que** l'élimination du CO₂ et de la vapeur d'eau est réalisée dans au moins un adsorbeur et, de préférence, dans au moins deux adsorbeurs fonctionnant de manière alternée.

8. Procédé selon l'une des revendications 1 à 7, **caractérisé en ce qu'**il est choisi dans le groupe formé par les procédés TSA et PSA.

9. Procédé selon l'une des revendications 1 à 8, **caractérisé en ce qu'**on opère à une pression d'adsorption de 10⁵ à 10⁷ Pa.

10. Procédé selon l'une des revendications 1 à 9, **caractérisé en ce qu'**il comprend au moins une étape de séparation cryogénique d'au moins une partie de l'air purifié, de préférence une étape de distillation cryogénique de l'air purifié.

## Patentansprüche

1. Verfahren zur Reinigung eines Kohlendioxid (CO₂) und Wasserdampf enthaltenden Luftstroms, bei dem man mindestens einen Teil der CO₂- und Wasserdampf-Verunreinigungen durch Adsorption der Verunreinigungen an mindestens einem calcinierten Aluminiumoxid, das mindestens ein Alkalimetalloder Erdalkalimetalloxid in einem Höchstgehalt von 10 Gew.-% enthält, bei einer Temperatur zwischen -10°C und 80°C entfernt.

2. Verfahren nach Anspruch 1, **dadurch gekennzeichnet, daß** man mindestens ein calciniertes Aluminiumoxid erhält, indem man:
a) ein Adsorptionsmittel auf Basis von aktiviertem Aluminiumoxid mit mindestens einer Alkalimetall- oder Erdalkalimetallsalzlösung imprägniert;
b) ein gemäß Schritt a) erhaltenes Adsorptionsmittel auf Basis von imprägniertem Aluminiumoxid bei einer Temperatur von mindestens 15°C trocknet;
c) ein gemäß Schritt b) erhaltenes Adsorptionsmittel auf Basis von getrocknetem Aluminiumoxid bei einer Temperatur von mindestens 120°C calciniert.

3. Verfahren nach Anspruch 1 oder 2, **dadurch gekennzeichnet, daß** man mindestens ein Alkalioder Erdalkalimetall unter Natrium, Kalium, Calcium und Mischungen davon auswählt.

4. Verfahren nach einem der Ansprüche 1 bis 3, **dadurch gekennzeichnet, daß** das calcinierte Aluminiumoxid 4 bis 10 Gew.-% Alkalimetall- oder Erdalkalimetalloxid enthält.

5. Verfahren nach einem der Ansprüche 1 bis 3, **dadurch gekennzeichnet, daß** das calcinierte Aluminiumoxid höchstens 5 Gew.-% Alkalimetalloder Erdalkalimetalloxid enthält.

6. Verfahren nach einem der Ansprüche 1 bis 5, **dadurch gekennzeichnet, daß** die Teilchen aus calciniertem Aluminiumoxid eine Größe zwischen 1 und 5 mm aufweisen.

7. Verfahren nach einem der Ansprüche 1 bis 6, **dadurch gekennzeichnet, daß** man die Entfernung des CO₂ und des Wasserdampfs in mindestens einem Adsorber und vorzugsweise in mindestens zwei alternierend arbeitenden Adsorbern durchführt.

8. Verfahren nach einem der Ansprüche 1 bis 7, **dadurch gekennzeichnet, daß** man es aus der Gruppe bestehend aus TSA- und PSA-Verfahren auswählt.

9. Verfahren nach einem der Ansprüche 1 bis 8, **dadurch gekennzeichnet, daß** man bei einem Adsorptionsdruck von 10⁵ Pa bis 10⁷ Pa arbeitet.

10. Verfahren nach einem der Ansprüche 1 bis 9, **dadurch gekennzeichnet, daß** es mindestens einen Schritt aufweist, bei dem man mindestens einen Teil der gereinigten Luft einer Tieftemperaturzerlegung unterwirft, vorzugsweise einen Schritt, bei dem man die gereinigte Luft einer Tieftemperaturdestillation unterwirft.

## Claims

1. Process for purifying an air flow containing carbon dioxide (CO₂) and water vapour, in which at least some of the CO₂ and water vapour impurities are removed by adsorbing the said impurities on at least one calcined alumina containing at least one alkali or alkaline-earth metal oxide, the maximum content of said oxide being of 10% by weight, the said adsorption being carried out at a temperature of between -10°C and 80°C.

2. Process according to Claim 1, **characterized in that** at least one calcined alumina is obtained by:
a) impregnating an adsorbent based on activated alumina with at least one solution of a salt of at least one alkali or alkaline-earth metal;
b) drying an adsorbent based on impregnated alumina obtained in step a) at a temperature of at least 15°C;
c) calcining an adsorbent based on dried alumina obtained in step b) at a temperature of at least 120°C.

3. Process according to one of Claims 1 and 2, **characterized in that** at least one alkali or alkaline-earth metal is selected from sodium, potassium, calcium and mixtures thereof.

4. Process according to one of Claims 1 to 3, **characterized in that** the calcined alumina contains from 4 to 10% by weight of alkali or alkaline-earth metal oxide.

5. Process according to one of Claims 1 to 3, **characterized in that** the calcined alumina contains at most 5% by weight of alkali or alkaline-earth metal oxide.

6. Process according to one of Claims 1 to 5, **characterized in that** the calcined alumina particles have a size of between 1 and 5 mm.

7. Process according to one of Claims 1 to 6, **characterized in that** the CO₂ and water vapour are removed in at least one adsorber and, preferably, in at least two adsorbers operating alternately.

8. Process according to one of Claims 1 to 7, **characterized in that** it is selected from the group formed by TSA and PSA processes.

9. Process according to one of Claims 1 to 8, **characterized in that** the operation is carried out at an adsorption pressure of from 10⁵ to 10⁷ Pa.

10. Process according to one of Claims 1 to 9, **characterized in that** it comprises at least one step of cryogenically separating at least some of the purified air, preferably a step of cryogenically distilling the purified air.
